Europäisches Patentamt

European Patent Office

Office européen des brevets

(11) Veröffentlichungsnummer: **0 384 289**
**A2**

## (12) EUROPÄISCHE PATENTANMELDUNG

(21) Anmeldenummer: 90102916.5

(22) Anmeldetag: **15.02.90**

(51) Int. Cl.5: **G02C 5/22**

(30) Priorität: **23.02.89 DE 3905581**

(43) Veröffentlichungstag der Anmeldung:
**29.08.90 Patentblatt 90/35**

(84) Benannte Vertragsstaaten:
**AT CH ES FR IT LI**

(71) Anmelder: **Fuchs, Helmut**
**Lindenstrasse 6**
**D-8391 Kellberg(DE)**

(72) Erfinder: **Fuchs, Helmut**
**Lindenstrasse 6**
**D-8391 Kellberg(DE)**

(54) **GSZ-Brillenscharnier.**

(57) Um bei einem Brillenscharnier eine spielfreie Verbindung, eine vorteilhafte Gangregulierung, eine verdrehgesicherte und weitgehendst ausreißgesicherte Scharnierachse (5) zu erhalten, ist diese als abgesetzte Gewindestiftschraube(7) mit zwei Größen Gewinde gleicher Steigung, das größere Gewinde (9) als Normalgewinde und das kleinere (8) als selbstfurchendes Gewinde ausgebildet.
Die Zentrierung und die Gangregulierung der beiden Scharnierhälften (1,4) durch die Scharnierachse (5) erfolgt aufgrund des Reibschlusses mit den Zentrier - und Reibflächen (13 und 14) Fig.1, (15) Fig.2 und (16) Fig.3 an dem mittigen Scharnierteil (2).

EP 0 384 289 A2

## GSZ - Brillenscharnier

Die Erfindung bezieht sich auf ein Brillenscharnier, bestehend aus zwei Scharnierteilen, deren außenliegende Scharnierlappen fluchtende Gewindebohrungen unterschiedlichen Durchmessers, und dessen innenliegender Scharnierlappen, versehen mit einer Zentrier- und Reibfläche, eine zylindrische Durchgangsbohrung zur Aufnahme einer Scharnierachse, die als abgesetzte Gewindestiftschraube ausgebildet ist, aufweisen.

Sei den bekannten Brillenscharnieren mit einer in eine fluchtende Scharnierbohrung der übereinandergreifenden Scharnierlappen zweier Scharnierteile eingreifenden Scharnierachse ergeben sich Schwierigkeiten hinsichtlich der Gangregulierung ohne Zuhilfenahme zusätzlicher Maßnahmen wie z.B. Beschichten der Gleitflächen mit Kunststoff oder Einsetzen von Kunststoffhülsen od.dgl. wie beispielsweise bekannt in der DE-B-1 196 397. Nachteilig bei diesen mit zusätzlichen Kunststoffteilen versehenen Brillenscharnieren ist bei der Verarbeitung durch Löten oder Schweißen die Kunststoffteile zerstört werden und ihre Funktion verlieren und deshalb nur begrenzt einsetzbar sind.

Desweiteren wirken die mit zusätzlichen Funktionsteilen versehenen Brillenscharniere aufgrund ihres Aufbaues klobig. Dazu kommt noch, daß mit einem Spiel zwischen der zylindrischen Scharnierachse und der Scharnierbohrung gerechnet werden muß, insbesondere nach einem gebrauchsbedingten Verschleiß. Derartige Brillenscharniere haben folglich keine genaue bzw. zentrierte Führung des Brillenbügels und bewirken deshalb im Anfangs - und Enddrehbereich des Brillenbügels einen ruckartigen Leergang.

Ein weiterer Nachteil ist das gebrauchsbedingte Lockern der bekannten Brillenscharniere weil die Scharnierachse nicht ausreichend gegen Verdrehung gesichert ist, sowie dem Nachteil von geschnittenen Gewinden, welche in diesen kleinen Dimensionen beispielsweise beim Inklinieren des Brillenbügels, sich leicht verformen und dadurch Leichtgängigkeit des Brillenbügels zur Folge hat. Durch wiederholtes Nachziehen der Scharnierachse kommt es zum unvermeidlichen Ausreißen des i.d.R. M 1,2 oder M 1,4 -Gewindes im Scharnierlappen, was die Zerstörung des Brillenbügels bedeutet. Zum Spielausgleich der Scharnierachse in der Scharnierbohrung sowie zur Verdrehsicherheit der Scharnierachse und zur Gangregulierung der ineinandergreifenden Scharnierlappen ist es bekannt, AT 2022/86 einen Kegelbolzen mit zusätzlichem Spanntrieb einzusetzen, der axial vorgespannt wird und sich aufgrund dieser axialen Vorspannung der verdrehgesicherte Kegelbolzen an die Bohrwandung anlegt.

Nachteilig bei dieser bekannten Konstruktion ist vor allem die aufwendige und teuere Herstellung sowie der Zeit - und Kostenintensive Zusammenbau dieses bekannten Brillenscharnieres.

Ein weiterer Nachteil dieses Brillenscharnieres ist, daß nach kurzer Gebrauchsdauer die kegelig ausgebildete Scharnierachse den mittleren Scharnierlappen ausreibt, in axialer Richtung aber nicht nachstellbar ist und somit wiederum ein Spiel zwischen Scharnierachse und Scharnierlappenbohrung entsteht, wodurch als Folge eine zu lockere Gängigkeit sowie ein Leerlauf des Brillenbügels auftritt. Wird ein Brillenbügel gewechselt, was sehr häufig vorkommt, ist die Demontage des alten - bzw. die Montage des neuen Bügels sehr aufwendig und außerdem aufgrund der Fertigungstoleranzen der Kegelbolzenverbindung nicht sichergestellt, daß die neue Verbindung den gewünschten Effekt erzielt, da die alten Scharnierteile zusammen gebohrt bzw. kegelig gerieben wurden und keine Garantie besteht, daß das neue zweilappige Bügelscharnierteil in seiner Bohrung mit dem alten Scharnierteil fluchtet, d.h. mit der Scharnierachse form - bzw. reibschlüssig verbunden ist.

Der Erfindung liegt somit die Aufgabe zugrunde, die Mängel der bekannten Brillenscharniere zu vermeiden und ein Brillenscharnier der eingangs geschilderten Art mit einfachen Mitteln so zu verbessern, daß nicht nur eine gewünschte Gängigkeit über eine längere Gebrauchsdauer hinweg eingehalten, sondern auch eine spielfreie Führung des über das Scharnier angelenkten Brillenbügels gewährleistet werden kann, ohne zusätzliche Hülsen oder Kegelbolzen und dgl. vorsehen zu müssen.

Die Erfindung löst die gestellte Aufgabe dadurch, daß die Scharnierachse als abgesetzter, mit zwei im Durchmesser ve schiedenen, aber gleicher Gewindesteigung versehenen Gewinde ausgebildeter Gewindestift mit einer Zentrier - und Reibfläche reibschlüssig in den mittleren Scharnierlappen eingreift.

Die Scharnierachse wird mit ihrem kleineren Durchmesser in die Bohrungen des außen - und innenliegenden Scharnierlappens eingeführt; der mittige Scharnierlappen wird vorzentriert. Durch das Eindrehen des größeren Gewindestiftes (z.B. M2) in den außenliegenden, bereits mit Gewindebohrung versehenen Scharnierlappens wird die Scharnierachse mit ihrem gegenüberliegenden kleineren Gewinde (z.B. M1,4), axial auf die Kernlochbohrung des zweiten außenliegenden Scharnierlappens bewegt und furcht ein spanloses Gewinde mit gleicher Steigung wie das beispielsweise M2-Gewinde mit hoher Ausreißfestigkeit in den zweiten außenliegenden Scharnierlappen.

Die Scharnierachse wird solange in die Scharnierlappen eingedreht bis zwischen der Zentrier- und Reibfläche der Scharnierachse und der Gegenfläche am mittleren Scharnierlappen die gewünschte reibschlüssige Verbindung entsteht.

Zwischen dem zylindrischen Teil der Scharnierachse und der Bohrung im mittleren Scharnierlappen ist keine Reibverbindung vorgesehen.

Aufgrund des Anpressdruckes der Zentrier- und Reibfläche der der Scharnierachse auf die Gegenfläche des mittleren Scharnierlappens wird dieser reibschlüssig an den äußeren Scharnierlappen gepresst.

Durch ein Weiterdrehen der Scharnierachse im Uhrzeigersinn auf die reibschlüssige Fläche des mittleren Scharnierlappens wird der außenliegende Scharnierlappen mit dem beispielsweise M2-Gewinde vom mittleren Lappen abgehoben wodurch eine Vorspannung entsteht, welche die Scharnierachse auf die Zentrier- und Reibfläche des mittleren Lappens und diesen gegen den zweiten äußeren Scharnierlappen drückt wodurch die konstante Spannung eine weiche und gleichbleibende Gängigkeit des Brillenbügels gewährleistet.

Ein erheblicher Vorteil des gefurchten Muttergewindes im außenliegenden Scharnierlappen ist die nicht unterbrochene Gewindefaser, der beim Umformen kaltverfestigte Werkstoff und das genau dem Stiftgewinde angepaßte Muttergewinde, das die Haltbarkeit der Verbindung erheblich erhöht.

Durch das fehlende Spiel und die Klemmkraft zwischen Schrauben- und Muttergewinde ist außerdem eine sehr gute Sicherungswirkung gegen Losdrehen der Scharnierachse vorhanden.

Das in dem einen außenliegenden größeren Gewinde sowie die größere Anzahl der Gewindegänge in beiden außenliegenden Scharnierlappen erhöht außer den bereits erwähnten Vorteilen die Ausreißfestigkeit der Scharnierachse gegenüber den bekannten Brillenscharnieren erheblich.

Einen konstruktiven- und Designvorteil bietet die als Scharnierachse ausgebildete Stiftschraube deshalb, weil sie gegenüber den bekannten Scharnieren keine Scharnierachse mit Schraubenkopf aufweist.

Als zusätzliches Gleitmittel kann eine beispielsweise 0,2mm Metalleinlagescheibe zwischen die Reibflächen der Scharnierachse und der Zentrier- und Reibfläche des mittleren Scharnierlappens vorgesehen werden

Desweiteren kann für die Scharnierachse eine galvanische Behandlung in Betracht gezogen werden.

Anstelle des Längsschlitzes zur Aufnahme einer Schraubenzieherklinge kann auch jede beliebige andere Form, z.B. Kreuzschlitz zum Feststellen der Scharnierachse Verwendung finden.

In der Zeichnung ist der Erfindungsgegenstand beispielsweise dargestellt. Es zeigen

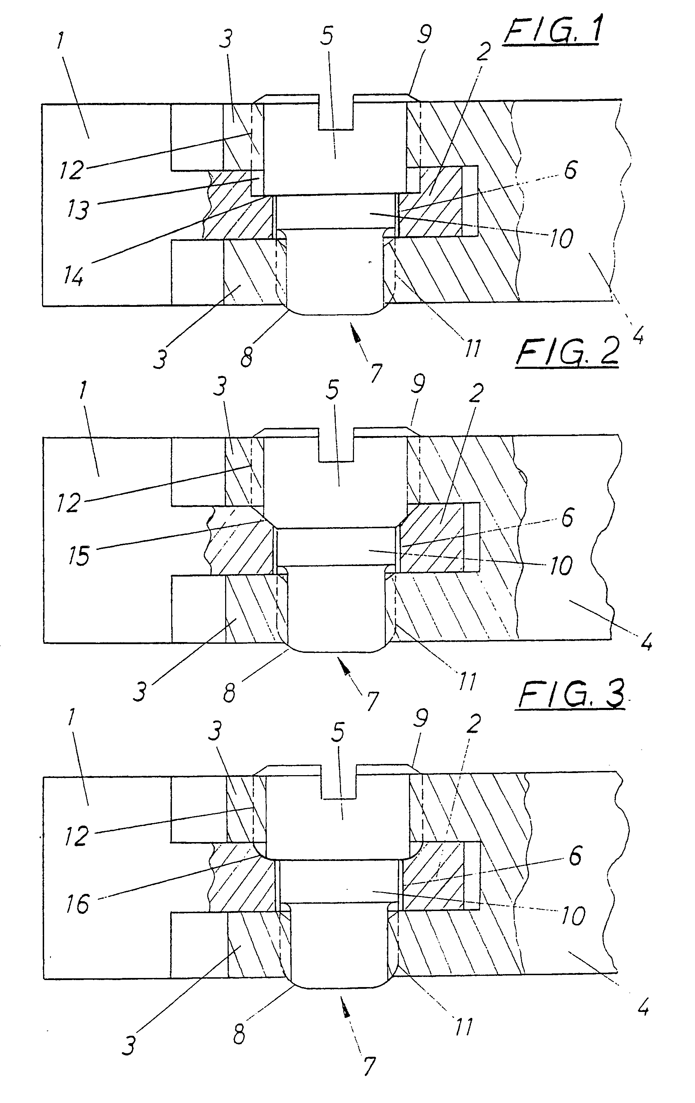

Fig.1 ein erfindungsgemäßes Brillenscharnier im Axialschnitt,

Fig.2 eine der Fig.1 entsprechende Darstellung einer Konstruktionsvariante des Brillenscharnieres,

Fig.3 eine weitere Ausführungsform eines erfindungsgemäßen Brillenscharnieres, ebenfalls im Axialschnitt.

Das dargestellte Brillenscharnier gemäß der Ausführungsform nach Fig.1 besteht aus einem beispielsweise dem Brillenbakken zugeordneten Scharnierteil (1) mit einem mittigen Scharnierlappen (2) der zwischen den beiden äußeren Scharnierlappen (3) des dem Bügel zugehörigen Scharnierteiles (4) ragt, und aus einer Scharnierachse (5) die in eine fluchtende Scharnierbohrung (6) eingreift.

Die Scharnierachse ist als abgesetzte Gewindestiftschraube(7) ausgebildet, wobei diese an einem Ende (9) aus einem Normalgewinde (12) und am anderen Ende (8) aus einem gewindefurchenden Gewinde (11) und dazwischen einem zylindrischen Teil (10) besteht.

Das Normalgewinde (9) zentriert mit seinem in den Scharnierlappen (2) reichenden Teil die Zentrierbohrung (13) und erzeugt an der Stirnfläche (14) einen Reibschluß.

Zwischen dem zylindrischen Teil der Scharnierachse (10) und der Scharnierbohrung (6) besteht keine Reibung.

Wird die Scharnierachse nach erfolgtem Reibschluß auf der Reibfläche (14) des mittigen Scharnierlappens (2) im Uhrzeigersinn weitergedreht, entsteht eine Vorspannung der Scharnierachse aufgrund des sichanhebens des äußeren Scharnierlappens (3), was eine verstärkte Reibung des mittigen Lappens (2) an dem zweiten äußeren Scharnierlappen (3) erzeugt.

Somit kann mit dieser Scharnierkonstruktion eine jeglich gewünschte Gängigkeit des Scharnieres aufgrund der variablen Vorspannung eingestellt werden ohne daß sich dabei die Scharnierachse selbständig lösen wird.

Die Ausführung nach Fig.2 unterscheidet sich von dem Brillenscharnier nach Fig.1 lediglich durch die unterschiedliche Zentrier- und Reibflächenanordnung (15), welche als schräge, vorzugsweise 45° - Ansenkung dargestellt ist.

Schließlich zeigt die Fig.3 eine weitere Alternative der Zentrier- und Reibflächenanordnung (16) die inform einer Rundung ausgebildet ist.

## Ansprüche

1. GSZ-Brillenscharnier, bestehend aus zwei Scharnierteilen ( 1 und 4), deren übereinandergreifende Scharnierlappen (3) fluchtende Gewindebohrungen und der Scharnierlappen (2) eine fluchtende Scharnierbohrung (6) zur Aufnahme einer Scharnierachse (5) aufweisen, dadurch gekennzeichnet, daß die Scharnierachse (5) mit dem Gewindestift (9) in die Zentrierbohrung (13), Fig.1 reibschlüssig gegengleich zylindrisch und stirnseitig (14) reibschlüssig im Scharnierlappen (2) eingreift und daß der Gewindestift (9) mit einem Normalgewinde (12), der Gewindestift (8) mit einem gewindefurchenden Gewinde (11) versehen ist, dabei aber beide Gewinde die gleiche Gewindesteigung aufweisen, und daß die Scharnierachse als abgesetzter Gewindestift ausgebildet ist.

2. GSZ-Brillenscharnier nach Anspruch 1, dadurch gekennzeichnet, daß die Scharnierachse (5)- ,Fig.2 stirnseitig am Gewindestiftteil (9) angeschrägt ist und somit zentrierend und reibschlüssig in die gegengleiche Schräge (15) des Scharnierlappens (2) eingreift.

3. GSZ-Brillenscharnier nach Anspruch 1 und 2, dadurch gekennzeichnet, daß die Scharnierachse (5) Fig.3, stirnseitig am Gewindestiftteil (9) abgerundet ist und somit zentrierend und reibschlüssig in die gegengleiche Rundung (16) des Scharnierlappens (2) eingreift.

4. GSZ-Brillenscharnier nach einem der Ansprüche 1 bis 4, dadurch gekennzeichnet, daß die Scharnierachse (5) ein Normalgewinde (12) größeren Durchmessers, ein gewindefurchendes Gewinde (11) kleineren Durchmessers und einen zylindrischen Teil (10) aufweist.

5. GSZ-Brillenscharnier nach Anspruch 4, dadurch gekennzeichnet, daß der außenliegende Scharnierlappen (3) zur Aufnahme des Normalgewindes (12) des Gewindestiftteiles (9) bereits ein geschnittenes Gewinde aufweist, der gegenüber liegende Scharnierlappen (3) zur Aufnahme des gewindegefurchten Gewindes (11) des Gewindestiftteiles (8) lediglich eine Kernlochbohrung aufweist die bei der Montage des Scharnieres durch den Gewindestiftteil (8) mit einem selbsthemmenden gefurchten Gewinde versehen wird.

6. GSZ-Brillenscharnier nach einem der Ansprüche 1 bis 5, dadurch gekennzeichnet, daß zwischen der Scharnierachse (5) sowie den Zentrierungs- und Reibflächen (13,14,) Fig.1, Zentrierungs- und reibflächen (15) Fig.2 und den Zentrierungs- und Reibflächen (16) Fig.3 eine Gleitunterlagsscheibe vorgesehen ist.

7. GSZ-Brillenscharnier nach einem der Ansprüche 1 bis 6, dadurch gekennzeichnet, daß alternativ zum Gewindestiftteil(9) ein sich am äußeren Scharnierlappen (3) abstützender Schraubenkopf eingetzt werden kann.

8. GSZ-Brillenscharnier nach einem der Ansprüche 1 bis 7, dadurch gekennzeichnet, daß der gewindefurchende Gewindedtiftteil (8) in dem außenliegenden Scharnierlappen (3) als Verdrehsicherung vorgesehen ist.

FIG.1

FIG.2

FIG.3